(19) Europäisches Patentamt
European Patent Office
Office européen des brevets

(11) **EP 3 306 878 A1**

(12) **EUROPEAN PATENT APPLICATION**

(43) Date of publication:
**11.04.2018 Bulletin 2018/15**

(51) Int Cl.:
*H04L 12/819* (2013.01)   *H04L 12/801* (2013.01)

(21) Application number: **16290193.8**

(22) Date of filing: **05.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
- **De Vleeschauwer, Danny**
  **2018 Antwerpen (BE)**
- **Van Leekwijck, Werner Adriaan Josephine**
  **2018 Antwerpen (BE)**

(74) Representative: **IP HILLS NV**
**Hubert Frère-Orbanlaan 329**
**9000 Gent (BE)**

(54) **A NETWORKED APPLICATION COMPONENT WITH CREDIT BASED CONGESTION CONTROL, AND CORRESPONDING METHOD**

(57)    A computer-implemented networked application component (101; 102) comprises:
- a need parameter manager (111; 121) adapted to regularly determine an instantaneous need (N(t)) of an application for throughput in said network;
- a credit parameter manager (112; 122) adapted to regularly update a throughput credit (C(t)) built up as a function of throughput difference, i.e. difference between actual data throughput and fair share; and
- a transport layer application programming interface (113; 123) adapted to alter one or more congestion control parameters ($\alpha(t)$, $\beta(t)$) in the transport layer (103, 104) of the network depending on the instantaneous need (N(t)) to temporarily receive a throughput above, respectively below, fair share in return for consuming, respectively building up, the throughput credit (C(t)).

Fig. 1

**Description**

<u>Technical Field</u>

The present invention generally relates to networked applications that send and receive data over a network, for instance the Internet. The invention more particularly concerns the government of the data rates at which such networked applications transport data over the network, i.e. governance of the rate at which a sender releases packets in the network, in order to avoid congestion.

<u>Background</u>

In order to share the transport resources of a network amongst different applications, it is known to implement congestion control mechanisms at the transport layer. Existing congestion control mechanisms rely on various parameters that govern the rate at which data packets are released into a network. Traditionally, these parameters are given certain values when the congestion control protocol is deployed in order to achieve fairness and convergence to a steady state. The parameter values in other words are chosen such that the different data flows get a fair share of the transport capacity of the network. Further, the parameter values are chosen such that convergence to a steady state is fast enough when new data flows are set-up that also require part of the transport capacity or when existing data flows are torn down therewith releasing transport capacity that can be shared between the remaining data flows.

The most widely used transport layer protocol is the Transmission Control Protocol (TCP). To determine how data packets can be released in the network, TCP maintains a congestion window (cwnd) defined as the amount of data that a sender can send unacknowledged in the network. The size of the congestion window is dynamically controlled in view of arrival of acknowledgments (ACKs) at the sender, each acknowledgement confirming the receipt of one or more data packets by the receiver. The way the congestion window is dynamically adapted in view of received acknowledgements further depends on the flavour of congestion management that is implemented in the TCP based network.

One way to manage congestion in TCP based networks is called TCP RENO. TCP RENO relies on two parameters to control the size of the congestion window cwnd during its so called "congestion avoidance" phase. The congestion window additive increase parameter $\alpha$ represents the amount of data packets per Round Trip Time (RTT) that the congestion window cwnd increases. More precisely, the congestion window cwnd increases by $\alpha$ packets each time receipt of the complete previous congestion window is acknowledged, which boils down to an increase of $\alpha/cwnd$ for each ACK that is received by the sender. The congestion window multiplicative decrease parameter $\beta$ represents the fraction the congestion window cwnd is decreased upon reception of a triple duplicate ACK. $\beta=0$ means no decrease whereas $\beta=1$ means a decrease of the congestion window cwnd to the minimal size. In legacy TCP RENO implementations, the parameter $\alpha$ is set 1 and the parameter $\beta$ is set 0.5.

In an alternative way to manage the congestion window cwnd during the "congestion avoidance" phase in TCP based networks, named TCP CUBIC, the role of the parameter $\alpha$, i.e. governance of how the congestion window cwnd grows when an ACK confirms proper receipt of data by a receiver, is taken up by a parameter C, the coefficient of the cubical window increase function. Further, TCP CUBIC has a parameter $\beta$ whose meaning and role is identical to the parameter $\beta$ in TCP RENO.

TCP RENO and TCP CUBIC also have a so called "slow start" phase during which the congestion window cwnd increases by Y packets per new ACK received, which corresponds to an exponential increase of the congestion window cwnd over time. In both TCP RENO and TCP CUBIC, the parameter Y is set equal to 1 packet. Typically, a TCP connection starts in the "slow start" phase, proceeds to the "congestion avoidance" phase after the first triple duplicate ACK is received, which reduces the congestion window cwnd by a factor $\beta$ as explained here above, and remains in the "congestion avoidance" phase as long as new ACKs or triple duplicate ACKs are received in time, i.e. before the TCP retransmit timer expires. When the TCP retransmit timer expires, i.e. when the ACK for a packet is not received before an expected time, TCP re-enters the "slow start" phase with a congestion window cwnd set to the minimal size.

A drawback of the existing congestion control mechanisms is that they strive at fairness while fairness might not always be desirable. There exist situations wherein an application temporarily has higher needs than its fair share whereas other applications may temporarily require less than the fair share.

Congestion exposure (Conex) described in IETF rfc6789 is a technology that enables the sender and nodes between the sender and receiver to estimate the congestion caused by a single data flow or an aggregation of data flows. The transport layer sender echoes the congestion feedback signal it receives from its receiver back into the network on new data packets it is sending. As a result thereof, the sender and network nodes between the sender and receiver can estimate the amount of congestion that is experienced by the network, as opposed to the amount of congestion experienced by the hop itself. Conex however does not describe or teach how to manage congestion in the network.

IETF's Transport Services (TAPS) workgroup describes transport services of existing transport layer protocols in an abstract way to enable an application developer to accurately describe the transport services that an application needs and - after negotiation with the TAPS framework - use the most suitable of the available transport layer protocols when the application is started. TAPS however only enables to select the transport layer protocol in view of an application's needs at the start of the application. There are no updates throughout the lifetime of the application.

The best existing solution to the problem of applications having needs above their fair share is deadline-aware congestion control, a congestion control mechanism wherein an application can associate deadlines with information to be transported. The parameters of the congestion control protocol at the transport layer are then adapted such that the number of deadlines that can be met, is maximized. Datacenter TCP (DCTCP), deadline-aware datacenterTCP (D2TCP), and deadline driven delivery (D3) are alternatives developments of this technique. They can be used only in datacenter context because in the open Internet, these techniques would completely starve regular data flows. Shared content addressing protocol (SCAP) allows clients to retrieve content from a server, the client being able to specify the start address and byte range of the content piece it is interested in, as well as a begin and end deadline. SCAP nodes will then schedule the content transfer such that a maximum amount of deadlines is met.

## Summary

Summarizing, deadline-aware congestion control mechanisms allow applications to obtain throughputs higher than the fair share in order to meet certain deadlines. These techniques however do not guarantee long term fairness as a result of which they cannot be used in the open Internet.

It is an objective of the present invention to disclose a networked application client, server and method that allow to govern the instantaneous throughput of data flows more intelligently, such that temporary needs of applications above their fair share are met while long term fairness between applications maintains guaranteed.

Embodiments of the invention disclose a computer-implemented networked application component adapted to send and receive data over a network, the application component comprising:

- a need parameter manager adapted to regularly determine an instantaneous need of an application for throughput in the network;
- a credit parameter manager adapted to regularly update a throughput credit built up as a function of throughput difference, i.e. difference between actual data throughput and fair share; and
- a transport layer application programming interface adapted to alter one or more congestion control parameters in the transport layer of the network depending on the instantaneous need to temporarily receive a throughput above, respectively below, fair share in return for consuming, respectively building up, the throughput credit.

The application component may for instance be the client part of an application or the server part of an application. In line with embodiments of the invention, the application itself determines its instantaneous needs for throughput in the network. These instantaneous needs may exceed the instantaneous fair share. Through an application programming interface (API), the application however can set one or more parameters in the transport layer such that it gets an instantaneous throughput that is higher than its fair share and consequently better matches its instantaneous needs. This is made possible on the condition that the application has built up throughput credits as a result of actual throughputs in the past below its fair share. An application consuming less than its fair share in other words builds up credits that can be used to temporarily grab throughputs above its fair share when needed. In the long term, each application still has to respect its fair share, but the instantaneous division of throughput is made more intelligent as applications with higher temporary needs will temporarily get a higher throughput that is taken from applications that do not need their fair share at that moment in time. As a consequence, transport resources are no longer shared fairly all the time. Deviations from the fair share allow applications to perform better whereas fairness remains guaranteed in the long term at the cost of maintaining a throughput credit.

In embodiments of the computer-implemented networked application component according to the present invention, defined by claim 2, the credit parameter manager is adapted to:

- increase the throughput credit if the throughput difference is negative and the throughput credit is below $\alpha$ maximum credit;
- maintain the throughput credit if the throughput difference is zero or the throughput credit is equal to or greater than the maximum credit; and
- decrease the throughput credit if the throughput difference is positive.

Indeed, to build up or consume credit, embodiments of the invention regularly determine or measure the throughput difference, i.e. the difference between the actual throughput of an application and its fair share. This can be done by predicting the throughput from a formula expressing the long term throughput as a function of the TCP parameters,

$\alpha$, $\beta$, C, $\gamma$, by measuring the throughput, or by comparing the congestion window $cwnd_{new}$ used by the application component according to the present invention with the congestion window $cwnd_{fair}$ that traditional TCP implementations like TCP RENO or TCP CUBIC would arrive at. Indeed, comparing the size of the congestion window $cwnd_{new}$ with the size of the congestion window $cwnd_{fair}$ traditional TCP implementations would arrive at is sufficient since the throughput corresponds to cwnd/RTT and RTT is the same Round Trip Time in both cases. When the throughput difference is negative, i.e. when the application's actual throughput is smaller than its fair share or equivalently when $cwnd_{new}$ < $cwnd_{fair}$, the throughput credit is increased. On the other hand, when the throughput difference is positive, i.e. when the actual throughput of the application exceeds its fair share or equivalently when $cwnd_{new}$ > $cwnd_{fair}$, the throughput credit of the application is decreased. There may however be a maximum credit such that the application cannot massively build up throughput credit that could then be used at another point in time to grab throughput above its fair share for a long period in time.

In embodiments of the computer-implemented networked application component according to the present invention, defined by claim 3, the credit parameter manager is adapted to update the throughput credit only at instances when congestion is experienced in the network.

Indeed, instead of using throughput difference to build up and consume throughput credit, a technique similar to Conex may be applied wherein throughput credit can only be built up or consumed at critical points in time, e.g. when congestion is experienced. As long as the network is congestion-free, the throughput credit of applications remains unchanged.

In embodiments of the computer-implemented networked application component according to the present invention, defined by claim 4, the transport layer implements TCP RENO, and the transport layer application programming interface is adapted to:

- set the congestion window multiplicative decrease parameter P of TCP RENO equal to 0,25 if the instantaneous need is positive and the throughput credit is positive;
- set the congestion window multiplicative decrease parameter $\beta$ of TCP RENO equal to 0,75 if the throughput credit is negative;
- set the congestion window multiplicative decrease parameter $\beta$ of TCP RENO equal to 0,50 otherwise; and
- keep the congestion window additive increase parameter $\alpha$ of TCP RENO equal to 1,00.

As mentioned above, in the TCP RENO congestion avoidance phase, the congestion window additive increase parameter $\alpha$ and the congestion window multiplicative decrease parameter $\beta$ determine respectively the increase in number of packets per RTT of the congestion window upon acknowledgement of the complete previous window, or equivalently an increase of $\alpha$/cwnd per ACK, and the fractional decrease of the congestion window upon receipt of a triple duplicate acknowledgement. These parameters are respectively set $\alpha=1$ and $\beta=0,5$ in legacy implementations of TCP RENO. According to embodiments of the invention, these parameters $\alpha$ and $\beta$ may be adjusted at regular times t, spaced apart a time interval $\Delta t$ in view of the throughput credit C(t) built up at time t and the applications throughput need N(t) at time t. In an advantageous embodiment, the parameter $\alpha$ may be left non-amended, whereas the parameter $\beta$ may be amended according to the formula:

$$\beta(t) = \begin{cases} 0{,}25 \text{ if } C(t) > 0 \text{ AND } N(t) > 0 \\ 0{,}75 \text{ if } C(t) < 0 \\ 0{,}50 \text{ otherwise} \end{cases} \qquad (1)$$

In case the throughput need exceeds the fair share and the application has positive throughput credit built up from the past, the fractional decrease of the congestion window is halved for that application. As a consequence, the throughput of the application is pushed back more slowly in congestion avoidance phase than the throughput of contending applications. The price paid by the application is that its throughput will be forced down more rapidly than other applications when its throughput credit is negative in congestion avoidance phase.

In the here above described embodiments of the computer-implemented networked application component according to the present invention, implementing formula (1), the credit parameter manager may further be adapted to update the throughput credit as defined by claim 5 through the formula:

$$C(t + \Delta t) = \min\left(C(t) + \left(1.22 - \sqrt{\frac{\alpha.(2-\beta)}{2.\beta}}\right), C_{max}\right) \qquad (2)$$

wherein

C(t) represents the throughput credit at an instance t;
$\alpha$ represents the congestion window additive increase parameter of TCP RENO;
$\beta$ represents the congestion window multiplicative decrease parameter of TCP RENO; and
Cmax represents a maximum credit.

Indeed, the throughput credit at a time instant t+$\Delta$t must be updated in view of the throughput credit at time instant t. It is noticed that the throughput credit can become negative. When the throughput credit C(t) is small but still positive and the applications need N(t) is large, then $\beta$ will be set 0,25 according to formula (1) and credit is consumed at a rate of 1,22-1,87 = -0,65 units per $\Delta$t. As there is no lower bound on the throughput credit C(t), the throughput credit will continue to decrease until it becomes negative. As soon as the throughput credit C(t) becomes negative, irrespective of the application's throughput need N(t), $\beta$ will be set 0,75 according to formula (1) and throughput credit is being built up at a rate of 1,22-0,91 = 0,31 units per $\Delta$t, making C(t) positive again. Throughput credit is further built up until a maximum credit $C_{max}$ is achieved.

In an embodiment of the computer-implemented networked application component according to the present invention, defined by claim 6, the networked application component forms part of a database application and the need parameter manager is adapted to determine the instantaneous need for throughput as the difference between a target buffer occupancy and an amount of data the database application has buffered.

A database application typically retrieves some records to process from a central database. As it needs time to process a record, the application desires to buffer some data records but not too many. The application's throughput need hence may be determined from the buffer occupancy, more particularly from the difference between a target buffer fill level and the actual buffer fill level. These actual and target buffer fill levels may be expressed as an amount of bytes or as a number of records. Hence the throughput need will be negative when the application's buffer is filled above the target buffer fill level. The application might be at risk of buffer overflow in such situation and desires to retrieve additional records at a lower data rate while building up throughput credit for later times. On the other hand, the throughput need becomes positive when the buffer fill level is below the target buffer fill level. The application has excess capacity to process records at such time instants and elects to trade its built up throughput credit for higher data retrieval rates.

In an embodiment of the computer-implemented networked application component according to the present invention, defined by claim 7, the networked application component forms part of an adaptive streaming video application and the need parameter manager is adapted to:

- set the need for throughput to a specific value $R_{tgt}$ lower than the fair share throughput in periods where temporarily higher throughputs are available such that a lower share than the fair share is requested and the throughput credit increases while video quality is maintained; and
- set the need for throughput to a specific value $R_{tgt}$ higher than the fair share throughput during periods of congestion in the network such that a higher share than the fair share is requested and video quality can be maintained.

In a video streaming application, a video client pulls down consecutive video segments from a video server. In adaptive streaming, each video segment is available in different qualities, encoded at different video bit rates $R_I$ with i = 1 ,.. I. An adaptive video streaming application attempts to have a number of video seconds ready in its play-out buffer, but not too many. The adaptive video streaming application further strives at optimal video quality but is reluctant to change the video quality often since such quality changes have a negative effect on the user experience. A client component of the adaptive video streaming application in line with embodiments of the present invention shall therefore consider the option to build up throughput credit in periods where temporarily higher throughputs are available by requesting for the throughput a specific target value $R_{tgt}$ below the fair share throughput but close to a selected video bit rate $R_i$, and hence close to a desired quality, for the video segments to be downloaded. Instead of striving at maximum quality for video segments, the adaptive streaming video application according to the present invention thus may elect to request a video segment at the current quality at a time where higher rates and consequently higher quality is achievable, i.e. when $cwnd_{fair} > cwnd_{new}$, herewith avoiding a quality change but at the same time building up throughput credit for later times. On the other hand, the adaptive video application according to the present invention may trade some or all of its built up throughput credit to temporarily request a specific target throughput $R_{tgt}$ above its fair share at a point in time the network gets congested, herewith avoiding it is pushed towards lower streaming rates and consequently towards a shift to a lower video quality. More precisely, the congestion window $cwnd_{new}$ is set to $R_{tgt}$ x RTT where $R_{tgt}$ is equal to the video bit rate of the previous video segment when $cwnd_{fair} < cwnd_{new}$. This is achieved through intelligent setting of the instantaneous throughput need N(t). The need parameter N(t) is set equal to the desired, specific target throughput value $R_{tgt}$. The congestion window $cwnd_{new}$ is set equal to $R_{tgt}$ x RTT with RTT being the measured Round Trip Time. Credit is then built up or consumed according to the formula:

$$\frac{dC(t)}{dt} = 1 - \frac{cwnd_{new}}{cwnd_{fair}} \quad \text{subject to } 0 \le C \le C_{max} \qquad (3)$$

A video streaming application that takes benefit of the present invention hence is able to match the video rate and throughput with more agility, herewith reducing the frequency of video quality changes.

Embodiments of the computer-implemented networked application component according to the present invention, defined by claim 8, further comprise:

- an interface and protocol adapted to communicate the one or more congestion control parameters in the transport layer altered to another networked application component.

As mentioned above, the networked application component can for instance be a client component or a server component of an application. Usually, the congestion control parameters in the transport layer controlled according to the present invention must be known at the sender side. In line with the present invention, an application component consequently shall impact the way it sends information and typically set the local transport layer congestion control parameters through an application programming interface (API). If however, the application component desires to control the way it receives information, it needs to control transport layer congestion control parameters remotely. Thereto, the application component may be equipped with an interface and implement a protocol that enables to convey the congestion control parameter settings to the other side, e.g. from client side to server side.

In an embodiment of the computer-implemented networked application component according to the present invention, defined by claim 9, the networked application component is an application client.

In an alternative embodiment of the computer-implemented networked application component according to the present invention, defined by claim 10, the networked application component is an application server.

In addition to a computer-implemented networked application component as defined by claim 1, the present invention also relates to a corresponding computer implemented method to send and receive data over a network executed at the application layer, the method as defined by claim 11 comprising:

- regularly determining an instantaneous need of an application for throughput in the network;
- regularly updating a throughput credit built up as a function of throughput difference, i.e. difference between actual data throughput and fair share; and
- altering one or more congestion control parameters in the transport layer of the network depending on the instantaneous need to temporarily receive a throughput above, respectively below, fair share in return for consuming, respectively building up, throughput credit when the instantaneous need exceeds a certain threshold.

## Brief Description of the Drawings

Fig. 1 is a block scheme of the application layer and transport layer of a network wherein an application client 101 and an application server 102 implement embodiments of the present invention;

Fig. 2 illustrates operation of the need parameter manager in an embodiment of the invention wherein the networked application is a database application;

Fig. 3 illustrates operation of the need parameter manager in an embodiment of the invention wherein the networked application is an adaptive video strearming application; and

Fig. 4 illustrates a computing system suitable for hosting embodiments of the networked application component according to the present invention, and suitable for implementing embodiments of the method to send and receive data according to the present invention.

## Detailed Description of Embodiment(s)

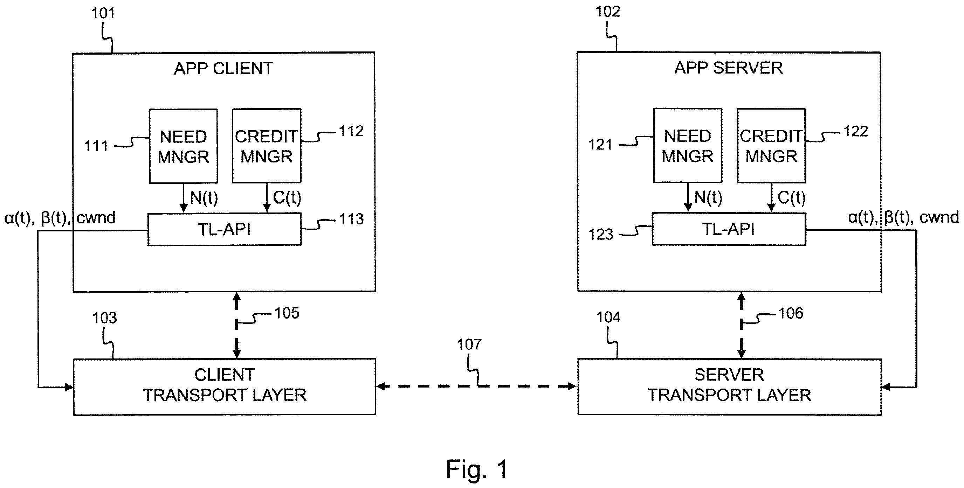

Fig. 1 illustrates the transport layer and application layer in a communication network, e.g. the Internet, wherein networked applications send and receive data flows over the network. The bi-directional data flow that is communicated between the application client 101 and application server 102 is denoted 105, 106, 107 in Fig. 1 and represented by dashed arrows between respectively the application layer 101 at client side and transport layer 103 at client side, the application layer 102 at server side and the transport layer 104 at server side, and the transport layer 103 at client side and transport layer 104 at server side. It is assumed that the Transmission Control Protocol (TCP) is used in Fig. 1 as transport layer protocol. More particularly, it is assumed in Fig. 1 that TCP RENO is implemented to govern congestion control at the transport layer 103, 104.

To determine how to release data packets 107 into the network the TCP client 103 and TCP server 104 each maintain a congestion window cwnd defined as the amount of data that they can respectively send unacknowledged into the network. Although Fig. 1 is drawn for bidirectional communication, typically the bulk of the data will be sent from server 104 to client 103 and throughput credit will be built up and consumed for data transferred in that direction. The most important parameters that govern the evolution of this congestion window cwnd in the congestion avoidance state of TCP are a parameter that governs how the congestion window cwnd grows when an acknowledgement ACK confirming the receipt of one or several data packets by the receiver arrives at the sender, and a parameter that governs how the congestion window cwnd decreases when a triple duplicate ACK arrives at the sender. If it is assumed that TCP RENO is implemented at the TCP client 103 and TCP server 104, the growth of the congestion window cwnd in the congestion avoidance phase is determined by the additive increase parameter $\alpha$ that represents the number of data packets per round trip time RTT that the congestion window cwnd increases upon acknowledgement of the complete previous congestion window, which boils down to an increase with $\alpha$/cwnd per new ACK. The decrease of the congestion window cwnd if TCP RENO is implemented at the TCP client 103 and TCP server 104 is determined by the multiplicative decrease parameter $\beta$ that represents the fraction the congestion window cwnd is decreased upon receipt of a triple duplicate acknowledgement ACK, with $\beta$=0 meaning no decrease of the congestion window cwnd and $\beta$=1 meaning a decrease of the congestion window cwnd to the minimal value.

At the application layer, the application client 101 drawn in Fig. 1 comprises a throughput need manager 111, a throughput credit manager 112, and a transport layer application programming interface TL-API 113. The application server 102 drawn in Fig 1 also comprises a throughput need manager 121, a throughput credit manager 122, and a transport layer application programming interface TL-API 123. In the embodiments of the invention described below, the throughput need manager 111, throughput credit manager 112 and transport layer application programming interface 113 control the additive increase parameter $\alpha(t)$ and the multiplicative decrease parameter $\beta(t)$ of the TCP RENO implementation in TCP client 103. As opposed to traditional TCP RENO, these parameters $\alpha$ and $\beta$ will no longer be static but vary in time t and consequently influence the sending of data in the direction from client 101 to server 102. In a similar fashion, the throughput need manager 121, throughput credit manager 122 and transport layer application programming interface 123 control the additive increase parameter $\alpha(t)$ and the multiplicative decrease parameter $\beta(t)$ of the TCP RENO implementation in TCP server 104 and consequently influence the sending of data in the direction from server 102 to client 101. As both sides work similarly, only the operation of the throughput need manager 121, throughput credit manager 122 and transport layer application programming interface 123 at the server side 102 will be described in detail in the following paragraphs. It is noticed that one side can set the parameters remotely, for instance the client 103 can set the parameters to be used in the server 104.

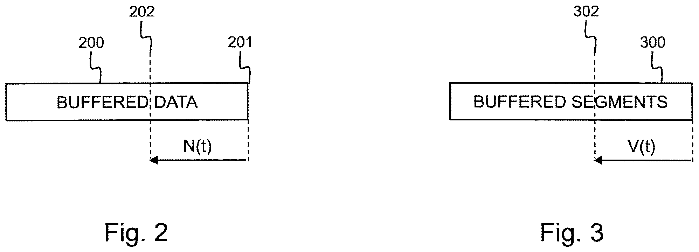

The throughput need manager 121 at regular times t determines the application's instantaneous needs for throughput in the direction from server 102 to client 101. This throughput need is denoted N(t) and communicated to the transport layer application programming interface 123. Further below, with reference to Fig. 2 and Fig. 3, the operation of embodiments of the throughout need manager 121 in case of a database application and in case of an adaptive video streaming application will be revealed in detail.

The throughput credit manager 122 at regular times t determines the throughput credit that the application has built up over time for sending data in the direction from server 102 to client 101. This throughput credit is denoted C(t) and the update thereof, i.e. the increase or decrease of credit, is derived from the instantaneous difference between the actual data throughput, or equivalently the congestion window $cwnd_{new}$, in direction from server 102 to client 101 and the fair share throughput, or equivalently the fair share congestion window $cwnd_{fair}$, that the server 102 would receive in a legacy TCP RENO implementation that does not consider built up credit. In the congestion avoidance state of such a legacy TCP RENO implementation the additive increase parameter is set statically as $\alpha$=1 and the multiplicative decrease parameter is set statically as $\beta$=0.5. It is known that for a TCP RENO controlled data flow with parameters $\alpha$ and $\beta$, the throughput A expressed in data packets per second, as long as the data flow remains in the congestion avoidance state, is approximately given by the formula:

$$\lambda = \sqrt{\frac{\alpha.(2-\beta)}{2.\beta}} \cdot \frac{1}{RTT.\sqrt{p}} \qquad\qquad (4)$$

Herein:

RTT represents the round trip time of the data flow; and

p represents the probability with which the network drops or marks data packets. Consequently, for a legacy TCP RENO controlled data flow with $\alpha=1$ and $\beta=0,5$, the throughput is approximately given by:

$$\lambda = \frac{1.22}{RTT.\sqrt{p}} \qquad (5)$$

Formula (5) hence represents the fair share throughput that the server 102 would receive, expressed in data packets per second, for sending data packets in the direction towards the client 101 in the congestion avoidance state of legacy TCP RENO.

The transport layer application programming interface 123 determines the parameters $\alpha(t)$ and $\beta(t)$ at regular time intervals spaced a time interval $\Delta t$ apart. The time interval $\Delta t$ may for instance be set equal to RTT multiplied with a factor K that represents an integer value equal to or greater than 1. In the embodiment illustrated by Fig. 1 it is assumed that the additive increase parameter $\alpha(t)$ is kept constant and equal to 1, whereas the parameter $\beta(t)$ is adjusted in function of the throughput need N(t) at time t and the built up throughput credit C(t) at time t as follows:

$$\beta(t) = \begin{cases} 0,25 \text{ if } C(t) > 0 \text{ AND } N(t) > 0 \\ 0,75 \text{ if } C(t) < 0 \\ 0,50 \text{ otherwise} \end{cases} \qquad (6)$$

As mentioned above, the throughput credit C(t) is determined by the credit manager 122 as a function of the throughput difference, i.e. the difference between the actual instantaneous throughput and the fair share throughput. The actual instantaneous throughput can for instance be measured by the server 102 by counting the data packets effectively sent, but in TCP RENO's congestion avoidance state is also approximated by formula (4). In the embodiment illustrated by Fig. 1, the throughput credit C(t) is therefore calculated by the throughput credit manager 122 as follows:

$$C(t + \Delta t) = \min\left(C(t) + \left(1.22 - \sqrt{\frac{\alpha.(2-\beta)}{2.\beta}}\right), C_{max}\right) \qquad (7)$$

The throughput credit at time t in other words is increased at time $t+\Delta t$ with the throughput difference, but a maximum credit $C_{max}$ cannot be exceeded.

It is noticed that the throughput credit can become negative. When C(t), i.e. the throughput credit at time t, is small but still positive and N(t), i.e. the application's instantaneous throughput need at time t is large, then $\beta(t)=0,25$ according to formula (6) and credit will be consumed at a rate 1,22-1,87 = -0,65 units per time interval $\Delta t$. As there is no lower bound on the throughput credit, C(t) will continue to decrease until it becomes negative. As soon as C(t) is negative, irrespective of the application's instantaneous need N(t), formula (6) makes $\beta(t)=0,75$ and credit is again being built up at a rate of 1,22-0,91 = 0,31 units per time interval $\Delta t$, making the throughput credit C(t) positive again.

With reference to Fig. 2 and Fig. 3, two embodiments of the invention will be described below which differ in the implementation of the throughput need manager 121, i.e. the way the application's instantaneous throughput need N(t) is calculated.

Fig. 2 shows the buffer 200 at the client side 101 when a database application is considered wherein the server 102 represents a central database and the client 101 processes records retrieved from the central database 102. As the client 101 needs some time to process a record, it wants some data records in its buffer 200, but not too many. The application's instantaneous throughput need N(t) therefore is determined as the difference between the amount 201 of information the application has buffered and a target buffer occupancy 202. This amount of information can be expressed either in bytes or as a number of records.

In an alternate embodiment illustrated by Fig. 3, it is assumed that video is streamed from the server 102 to the client 101. In this embodiment the client 101 pulls down consecutive video segments available at the server 102, where each video segment is assumed to be available in a number of qualities. The client 101 tries to keep a number of video seconds V(t) in its play-out buffer 300 drawn in Fig. 3, but not too many. In other words, there is a target buffer fill level 302. At the same time the video streaming application aims for a high quality video but remains reluctant to change the video quality too frequently as video quality changes are noticeable for the viewer and therefore reduce the end user experience. In such an adaptive video application like for instance DASH or dynamic adaptive streaming over hypertext transfer protocol (HTTP), a rate decision algorithm (RDA) typically determines in which quality video segments are downloaded. A traditional RDA bases its decision on the occupancy of the play-out buffer 300 and the quality evolution alone. The RDA in embodiments of the present invention also shall consider the built up throughput credit C(t). If the throughput the RDA sees is only temporary higher, a traditional RDA would ask for a higher quality or leave gaps between downloaded video segments. The RDA in an embodiment of the present invention sets the instantaneous need N(t) equal to a target throughput $R_{tgt}$ by enforcing the congestion window cwnd to the value $cwnd_{initial} = R_{tgt}$ x RTT and setting $\alpha(t)=0$ and $\beta(t)=0$, so that this congestion window is maintained until the next update, such that a slightly lower share than the fair share, corresponding to a fair share congestion window $cwnd_{fair}$, is asked for, just large enough to maintain the current video quality, and throughput credit C(t) is being built up following the formula:

$$\frac{dC(t)}{dt} = 1 - \frac{cwnd_{new}}{cwnd_{fair}} \quad \text{subject to } 0 \leq C \leq C_{max} \tag{8}$$

This throughput credit that is built up, can be used later, during periods of heavier congestion, by the RDA which then sets N(t) equal to $R_{tgt}$, a value higher than the current throughput, to request more than the fair share such that it can maintain the current video quality longer than a traditional RDA would do.

It is noticed that the present invention is not restricted to a particular transmission layer protocol. Although TCP is mentioned here above, other transport layer protocols like for instance the Datagram Congestion Control Protocol (DCCP), the Stream Control Transmission Protocol (SCTP), or congestion control protocols relying on the Real-time Transport Protocol (RTP) or the User Datagram Protocol (UDP) could be implemented and take benefit of alternate embodiments of the present invention that control the congestion control parameters of such transport layer protocols, similarly to TCP here above.

It is further noticed that the present invention is not restricted to a particular congestion control technique implemented at the transport layer. Although TCP RENO is mentioned here above, the skilled person shall appreciate that alternative embodiments of the present invention may set the congestion control parameters of TCP CUBIC or compound TCP with similar advantages. Alternative embodiments that set the congestion control parameters of TCP RENO may also set the slow start phase parameters instead of only parameters used in the congestion avoidance phase.

The skilled person further will appreciate that in alternative embodiments of the invention, besides the multiplicative decrease parameter β, also the additive increase parameter can be set by the application layer as a function of the instantaneous throughput need N(t) and the built up throughput credit C(t), and either one or both can take continuous values instead of the discrete values in the example here above.

Obviously, also the definition of the application's instantaneous throughput need N(t) is not restricted to the examples given above. Many alternative definitions for the application's throughput need exist.

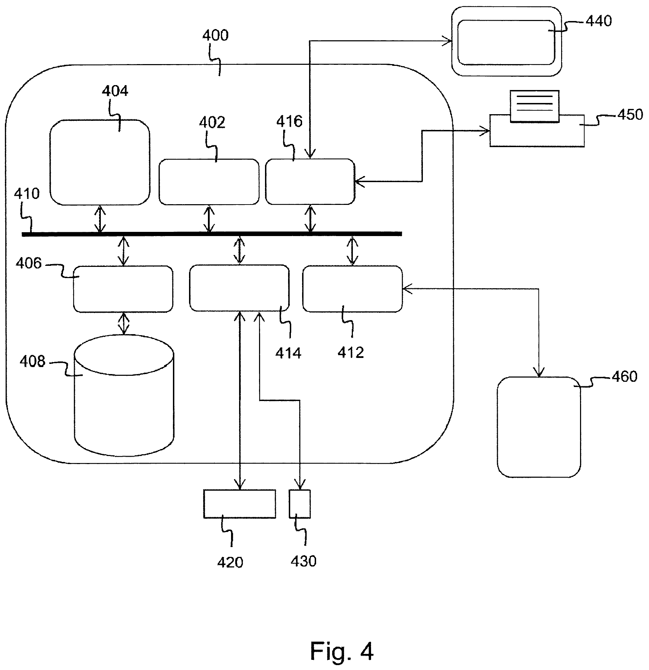

Fig. 4 shows a suitable computing system 400 for hosting the application component according to the present invention and suitable for implementing the method for sending and receiving data according to the present invention, embodiments of which are illustrated by Fig. 1 - Fig 3. Computing system 400 may in general be formed as a suitable general purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1 Gb Ethernet interfaces that enables computing system 400 to communicate with other devices and/or systems, for example mechanisms for communicating with one or more other computing systems. The communication interface 412 of computing system 400 may be connected to such another computing system 460 by means of a local area network (LAN) or a wide area network (WAN), such as for example the internet, in which case the other computing system may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1 TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

The steps executed in the method for sending and receiving data according to the present invention, illustrated by the above embodiments, may be implemented as programming instructions stored in local memory 404 of the computing system 400 for execution by its processor 402. Alternatively, the instructions may be stored on the storage element 408 or be accessible from another computing system through the communication interface 412.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention, in other sequences, or in orientations different from the one(s) described or illustrated above.

**Claims**

1. A computer-implemented networked application component (101; 102) adapted to send and receive data (105, 106, 107) over a network, said application component (101,102) comprising:

   - a need parameter manager (111; 121) adapted to regularly determine an instantaneous need (N(t)) of an application for throughput in said network;
   - a credit parameter manager (112; 122) adapted to regularly update a throughput credit (C(t)) built up as a function of throughput difference, i.e. difference between actual data throughput and fair share; and
   - a transport layer application programming interface (113; 123) adapted to alter one or more congestion control parameters ($a(t)$, $\beta(t)$) in the transport layer (103, 104) of said network depending on said instantaneous need N(t) to temporarily receive a throughput above, respectively below, fair share in return for consuming, respectively building up, said throughput credit (C(t)).

2. A computer-implemented networked application component (101; 102) according to claim 1, wherein said credit parameter manager (112; 122) is adapted to:

   - increase said throughput credit (C(t)) if said throughput difference is negative and said throughput credit (C(t)) is below a maximum credit;
   - maintain said throughput credit (C(t)) if said throughput difference is zero or said throughput credit (C(t)) is equal to or greater than said maximum credit; and
   - decrease said throughput credit (C(t)) if said throughput difference is positive.

3. A computer-implemented networked application component (101; 102) according to claim 1, wherein said credit parameter manager (112; 122) is adapted to update said throughput credit (C(t)) only at instances when congestion is experienced in said network.

4. A computer-implemented networked application component (101; 102) according to claim 1, wherein said transport layer implements TCP RENO, and said transport layer application programming interface (113; 123) is adapted to:

   - set the congestion window multiplicative decrease parameter $\beta$ of TCP RENO equal to 0,25 if said instantaneous need (N(t)) is positive and said throughput credit (C(t)) is positive;
   - set the congestion window multiplicative decrease parameter $\beta$ or TCP RENO equal to 0,75 if said throughput credit (C(t)) is negative;
   - set the congestion window multiplicative decrease parameter $\beta$ of TCP RENO equal to 0,50 otherwise; and
   - keep the congestion window additive increase parameter $\alpha$ of TCP RENO equal to 1,00.

**5.** A computer-implemented networked application component (101; 102) according to claim 4, wherein said credit parameter manager (112; 122) is further adapted to update said throughput credit (C(t)) through the formula:

$$C(t + \Delta t) = \min\left( C(t) + \left( 1.22 - \sqrt{\frac{\alpha.(2-\beta)}{2.\beta}} \right), C_{max} \right)$$

wherein

C(t) represents said throughput credit at an instance t;
$\alpha$ represents the congestion window additive increase parameter of TCP RENO;
$\beta$ represents the congestion window multiplicative decrease parameter of TCP RENO; and
Cmax represents a maximum credit.

**6.** A computer-implemented networked application component (101; 102) according to claim 1, wherein said networked application component (101; 102) forms part of a database application and wherein said need parameter manager (111; 121) is adapted to determine said instantaneous need (N(t)) for throughput as the difference between an amount (201) of data said database application has buffered and a target buffer occupancy (202).

**7.** A computer-implemented networked application component (101; 102) according to claim 1, wherein said networked application component (101; 102) forms part of an adaptive streaming video application and wherein said need parameter manager (111; 121) is adapted to:

- set said need (N(t)) for throughput to a specific value lower than the fair share throughput in periods where temporarily higher throughputs are available such that a lower share than said fair share is requested and said throughput credit increases while video quality is maintained; and
- set said need (N(t)) for throughput to a specific value higher than the fair share throughput during periods of congestion in said network such that a higher share than said fair share is requested and video quality can be maintained.

**8.** A computer-implemented networked application component (101; 102) according to claim 1, further comprising:

- an interface and protocol adapted to communicate said one or more congestion control parameters in the transport layer altered to another networked application component.

**9.** A computer-implemented networked application component (101) according to claim 1, wherein said networked application component is an application client.

**10.** A computer-implemented networked application component (102) according to claim 1, wherein said networked application component is an application server.

**11.** A computer-implemented method to send and receive data (105, 106, 107) over a network executed at the application layer (101, 102), said method comprising:

- regularly determining an instantaneous need (N(t)) of an application for throughput in said network;
- regularly updating a throughput credit (C(t)) built up as a function of throughput difference, i.e. difference between actual data throughput and fair share; and
- altering one or more congestion control parameters ($\alpha$(t), $\beta$(t)) in the transport layer (103, 104) of said network depending on said instantaneous need (N(t)) to temporarily receive a throughput above, respectively below, fair share in return for consuming, respectively building up, said throughput credit (C(t)).

Fig. 1

300

302

BUFFERED SEGMENTS

V(t)

Fig. 3

201

202

200

BUFFERED DATA

N(t)

Fig. 2

Fig. 4

Europäisches
Patentamt

European
Patent Office

Office européen
des brevets

# EUROPEAN SEARCH REPORT

Application Number

EP 16 29 0193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 130 713 B2 (BEIROUMI MOHAMMAD ZIB [DK] ET AL) 6 March 2012 (2012-03-06) | 1,3,4, 6-11 | INV. H04L12/819 |
| Y | * paragraph [0023] - paragraph [0025] * ----- | 2 | H04L12/801 |
| Y | HEINANEN TELIA FINLAND R GUERIN UNIVERSITY OF PENNSYLVANIA J: "A Single Rate Three Color Marker; rfc2697.txt", NETWORK WORKING GROUP RFC 1717, INTERNET SOCIETY (ISOC) 4, RUE DES FALAISES CH-1205 GENEVA, SWITZERLAND, CH, 1 September 1999 (1999-09-01), XP015008480, ISSN: 0000-0003 | 2 | |
| A | * page 3 * ----- | 1,3-11 | |
| A | US 4 792 941 A (YANOSY JR JOHN A [US] ET AL) 20 December 1988 (1988-12-20) * column 5 * ----- | 1-11 | |

| | |
|---|---|
| | TECHNICAL FIELDS SEARCHED (IPC) |
| | H04L |

The present search report has been drawn up for all claims

| Place of search | Date of completion of the search | Examiner |
|---|---|---|
| The Hague | 26 April 2017 | Iavarone, Federico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**EP 3 306 878 A1**

## ANNEX TO THE EUROPEAN SEARCH REPORT
## ON EUROPEAN PATENT APPLICATION NO.

EP 16 29 0193

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2017

| Patent document cited in search report | | Publication date | Patent family member(s) | | Publication date |
|---|---|---|---|---|---|
| US 8130713 | B2 | 06-03-2012 | GB | 2482816 A | 15-02-2012 |
| | | | US | 2010303044 A1 | 02-12-2010 |
| | | | WO | 2010138293 A1 | 02-12-2010 |
| US 4792941 | A | 20-12-1988 | AU | 581962 B2 | 09-03-1989 |
| | | | CN | 85109433 A | 20-08-1986 |
| | | | EP | 0207214 A2 | 07-01-1987 |
| | | | ES | 8801484 A1 | 01-03-1988 |
| | | | JP | S61196644 A | 30-08-1986 |
| | | | MX | 160480 A | 12-03-1990 |
| | | | NZ | 215111 A | 29-01-1990 |
| | | | US | 4792941 A | 20-12-1988 |

EPO FORM P0459

For more details about this annex : see Official Journal of the European Patent Office, No. 12/82